(19) Europäisches Patentamt / European Patent Office / Office européen des brevets

(11) **EP 3 650 477 A1**

(12) **EUROPEAN PATENT APPLICATION**
published in accordance with Art. 153(4) EPC

(43) Date of publication:
**13.05.2020 Bulletin 2020/20**

(51) Int Cl.:
**C08F 220/18** (2006.01)  **C08F 265/06** (2006.01)
**C08L 51/06** (2006.01)  **C08L 101/00** (2006.01)

(21) Application number: **18827794.1**

(22) Date of filing: **29.06.2018**

(86) International application number:
**PCT/JP2018/024831**

(87) International publication number:
**WO 2019/009203 (10.01.2019 Gazette 2019/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2017 JP 2017132989**
**27.03.2018 JP 2018060726**

(71) Applicant: **Techno-UMG Co., Ltd.**
**Tokyo 105-0021 (JP)**

(72) Inventors:
• **NAITO, Yoshitaka**
  **Ube-shi**
  **Yamaguchi 755-8580 (JP)**
• **TAO, Kousaku**
  **Ube-shi**
  **Yamaguchi 755-8580 (JP)**
• **TAGUCHI, Yuki**
  **Ube-shi**
  **Yamaguchi 755-8580 (JP)**

(74) Representative: **Lavoix**
  **Bayerstrasse 83**
  **80335 München (DE)**

(54) **POLYMER, GRAFT POLYMER, AND THERMOPLASTIC RESIN COMPOSITION**

(57) According to the present invention, a polymer is provided capable of obtaining a graft polymer having a high graft ratio while having a low degree of crosslinking, a graft polymer having a high graft ratio, which is suitable as a material of a thermoplastic resin composition capable of obtaining a molded article excellent in impact resijstance, surface appearance, and thermal stability, and a thermoplastic resin composition capable of obtaining a molded article excellent in impact resistance, surface appearance, and thermal stability. A polymer obtained by polymerizing a mixture containing an (Aa) component and an (Ab) component is used.

The (Aa) component is an acrylic acid ester.

The (Ab) component is a branched polyfunctional compound having two or more allyl groups, and all carbon-carbon double bonds contained in the polyfunctional compound are derived from the allyl groups.

EP 3 650 477 A1

**Description**

TECHNICAL FIELD

The present invention relates to a polymer, a graft polymer, and a thermoplastic resin composition.

Priority is claimed on Japanese Patent Application No. 2017-132989, filed on July 6, 2017, and Japanese Patent Application No. 2018-060726, filed on March 27, 2018, the contents of which are incorporated herein by reference.

BACKGROUND ART

In the manufacture of molded articles excellent in impact resistance, molding processability, secondary processability (such as plating and coating), and surface appearance are obtained, a thermoplastic resin composition such as acrylonitrile-butadiene-styrene (ABS) resin, acrylonitrile-styrene-acrylic acid ester (ASA) resin, and acrylonitrile-ethylene-propylene-nonconjugated diene copolymer-styrene (AES) resin is used in a wide range of fields.

The thermoplastic resin composition includes a graft polymer and a thermoplastic resin other than the graft polymer (hereinafter also referred to as "another thermoplastic resin"). The graft polymer is a polymer obtained by graft polymerization of a monomer such as a vinyl monomer that imparts compatibility with another thermoplastic resin to a rubber polymer (hereinafter also referred to as a "rubber polymer").

Various rubber polymers are used for the graft polymer. For example, polybutadiene, a polybutadiene-styrene copolymer, silicone rubber, acrylic rubber, olefin rubber such as ethylene propylene diene rubber (EPDM), and composite rubber obtained by combining these are known. Among these, since a molded article to be obtained is excellent in light resistance, chemical resistance, and economical efficiency, the acrylic rubber obtained by polymerizing acrylic acid ester is widely used.

Since a degree of crosslinking of a rubber polymer in the graft polymer greatly affects impact resistance of a molded article to be obtained, it is important to control the degree of crosslinking of the rubber polymer.

For example, it is known that a molded article excellent in impact resistance is obtained from a thermoplastic resin composition containing a graft polymer in which EPDM or acrylic rubber having a specific degree of crosslinking is used as a rubber polymer (for example, see PTLs 1 to 3).

In addition, as a method of adjusting the degree of crosslinking of the acrylic rubber, a method is known in which when producing the acrylic rubber, a polyfunctional compound having two or more (meth)acryloyl groups, vinyl groups, allyl groups, or the like in a molecule is used as a crosslinking agent, and the crosslinking agent is copolymerized with acrylic acid ester.

Citation List

Patent Literature

[PTL 1] Japanese Unexamined Patent Application, First Publication No. 2012-224670
[PTL 2] Japanese Unexamined Patent Application, First Publication No. 2002-284823
[PTL 3] Japanese Unexamined Patent Application, First Publication No. 2012-214734

DISCLOSURE OF INVENTION

Technical Problem

However, in a graft polymer, a graft ratio, which is a proportion of a rubber polymer coated with a polymer of monomers such as vinyl monomers, also greatly affects a physical property of a molded article. In general, as a graft ratio becomes higher, surface appearance or thermal stability of the molded article tends to be better. As a method of increasing the graft ratio, a method of increasing an addition amount of a polyfunctional compound used for adjusting a degree of crosslinking of a rubber polymer is generally used.

However, when the graft ratio is increased by increasing the addition amount of the polyfunctional compound, the degree of crosslinking of the rubber polymer also tends to increase, and impact resistance of a molded article is prone to decrease.

As described above, it is difficult to control the degree of crosslinking of the rubber polymer and the graft ratio of the graft polymer at a high level, and to make impact resistance of the molded article compatible with surface appearance and thermal stability.

An object of the present invention is to provide a polymer capable of obtaining a graft polymer having a high graft ratio while having a low degree of crosslinking.

Also, another object of the present invention is to provide a graft polymer having a high graft ratio, which is suitable as a material of a thermoplastic resin composition capable of obtaining a molded article excellent in impact resistance, surface appearance, and thermal stability.

Also, still another object of the present invention is to provide a thermoplastic resin composition capable of obtaining a molded article excellent in impact resistance, surface appearance, and thermal stability.

Solution to Problem

The present invention includes the following aspects.

[1] A polymer obtained by polymerizing a mixture containing an (Aa) component and an (Ab) component.
The (Aa) component is an acrylic acid ester.
The (Ab) component is a branched polyfunctional compound having two or more allyl groups, and all carbon-carbon double bonds contained in the polyfunctional compound are derived from the allyl groups.
[2] The polymer according to [1],
in which the (Ab) component is at least one selected from the group consisting of pentaerythritol tetraallyl ether, pentaerythritol triallyl ether, pentaerythritol diallyl ether, trimethylolpropane triallyl ether, and trimethylolpropane diallyl ether.
[3] The polymer according to [1] or [2],
in which a degree of swelling is 4 to 20 times.
[4] A graft polymer obtained by graft polymerization of one or more monomers selected from the group consisting of aromatic vinyl, vinyl cyanide, (meth)acrylic acid ester, N-substituted maleimide, and maleic acid to the polymer according to any one of [1] to [3].
[5] The graft polymer according to [4],
in which a grafting density is 0.065 mol/nm$^2$ or higher.
[6] A thermoplastic resin composition, including:

the graft polymer according to [4] or [5]; and
a thermoplastic resin other than the graft polymer.

Advantageous Effects of Invention

According to the polymer of the present invention, it is possible to obtain a graft polymer having a high graft ratio while having a low degree of crosslinking.

Also, the graft polymer of the present invention has a high graft ratio and is suitable as a material of a thermoplastic resin composition capable of obtaining a molded article excellent in impact resistance, surface appearance, and thermal stability.

Also, according to the thermoplastic resin composition of the present invention, it is possible to obtain a molded article excellent in impact resistance, surface appearance, and thermal stability.

BEST MODE FOR CARRYING OUT THE INVENTION

Hereinafter, the present invention will be described in detail.

Term definitions below apply throughout the present specification and claims.

A "molded article" means an object obtained by molding a thermoplastic resin composition.

"(Meth)acrylic" is a generic term for "acrylic" and "methacrylic".

"(Meth)acrylic acid ester" is a generic term for "acrylic acid ester" and "methacrylic acid ester".

"Polymer"

A polymer of the present invention (hereinafter also referred to as a "polymer (A)") is obtained by polymerizing a mixture (hereinafter also referred to as a "mixture ($\alpha$)") containing an (Aa) component and an (Ab) component below. That is, the polymer (A) is a polymer of at least the (Aa) component and the (Ab) component, and contains an (Aa) component unit and an (Ab) component unit. The polymer (A) obtained by polymerizing the mixture ($\alpha$) is prone to be rubbery. The mixture ($\alpha$) may contain a monomer other than the (Aa) component and the (Ab) component (hereinafter also referred to as "another monomer"), according to a physical property required for a molded article.

(Aa) component: acrylic acid ester.
(Ab) component: a branched polyfunctional compound having two or more allyl groups, and all carbon-carbon double bonds contained in the polyfunctional compound are derived from the allyl groups.

In the polymer (A), it is not always easy to specify how the (Aa) component and the (Ab) component are polymerized. That is, there are circumstances (impossible/impractical circumstances) in which it is not possible or almost impractical to specify the polymer (A) directly by a structure or a characteristic thereof. Therefore, in the present invention, it is more appropriate to define the polymer (A) as "a polymer obtained by polymerizing a mixture containing the (Aa) component and the (Ab) component".

<(Aa) component>

The (Aa) component is acrylic acid ester.
Examples of the (Aa) component include an acrylic acid alkyl ester having an alkyl group having 1 to 12 carbon atoms and an acrylic acid aryl ester having an aromatic hydrocarbon group such as a phenyl group or a benzyl group.
More specifically, examples of the (Aa) component include methyl acrylate, ethyl acrylate, n-propyl acrylate, i-propyl acrylate, n-butyl acrylate, i-butyl acrylate, t-butyl acrylate, amyl acrylate, isoamyl acrylate, octyl acrylate, 2-ethylhexyl acrylate, decyl acrylate, lauryl acrylate, stearyl acrylate, cyclohexyl acrylate, pentyl acrylate, phenyl acrylate, and benzyl acrylate. Among these, the n-butyl acrylate, 2-ethylhexyl acrylate, and the ethyl acrylate are preferable from the viewpoint of that the polymer" (A) is prone to be rubbery.
One kind of these (Aa) components may be used alone and two or more kinds thereof may be used by being mixed.
The content of the (Aa) component is preferably 80% by mass or more and 99.95% by mass or less, and more preferably 90.1% by mass or more and 99.9% by mass or less, with respect to the total (total mass) of the (Aa) component, (Ab) component, and the other monomer in the mixture ($\alpha$). When the content of the (Aa) component is within the above range, a molded article to be obtained is further excellent in impact resistance, surface appearance, and thermal stability.

<(Ab) component>

The (Ab) component is a branched polyfunctional compound having two or more allyl groups. All carbon-carbon double bonds contained in the polyfunctional compound are derived from the allyl groups.
The (Ab) component is obtained, for example, by reacting a branched polyol and allyl alcohol with each other. Examples of the branched polyol include pentaerythritol, dipentaerythritol, trimethylolethane and a dimer thereof, trimethylolpropane and a dimer thereof, and triethylolpropane and a dimer thereof. Among these, the pentaerythritol and the trimethylolpropane are preferable.
More specifically, examples of the (Ab) component include pentaerythritol tetraallyl ether, pentaerythritol triallyl ether, pentaerythritol diallyl ether, trimethylolpropane triallyl ether, and trimethylolpropane diallyl ether. Among these, the pentaerythritol triallyl ether and the trimethylolpropane triallyl ether are preferable.
One kind of these (Ab) components may be used alone and two or more kinds thereof may be used by being mixed.
The content of the (Ab) component is preferably 0.05% by mass or more and 5% by mass or less, and more preferably 0.1% by mass or more and 3% by mass or less, with respect to the total (total mass) of the (Aa) component, (Ab) component, and the other monomer in the mixture ($\alpha$). When the content of the (Ab) component is within the above range, it becomes easy to adjust a degree of swelling of the polymer (A) to be 4 to 20 times and a grafting density of a graft polymer (C) to be described later to 0.065 mol/$nm^2$ or higher and 0.5 mol/$nm^2$ or lower. As a result, a molded article to be obtained is further excellent in impact resistance, surface appearance, injection speed dependence of a molding appearance, and thermal stability.

<Another monomer>

In a case where the mixture ($\alpha$) contains other monomers, the polymer (A) includes the (Aa) component unit, the (Ab) component unit, and another monomer unit.
The other monomer is not particularly limited as long as it is copolymerizable with the (Aa) component and the (Ab) component, and examples thereof include aromatic vinyl, vinyl cyanide, methacrylic acid ester, N-substituted maleimide, and maleic acid. In addition, for the purpose of adjusting the degree of crosslinking of the polymer (A), a compound having two or more carbon-carbon double bonds, other than the (Ab) component and the aromatic vinyl, the methacrylic acid ester, and N-substituted maleimide may be used as the other monomer.
Examples of the aromatic vinyl include styrene, $\alpha$-methylstyrene, o-, m-, or p-methylstyrene, vinylxylene, p-t-butylstyrene, and ethylstyrene.

Examples of the vinyl cyanide include acrylonitrile and methacrylonitrile.

Examples of the methacrylic acid ester include methyl methacrylate, ethyl methacrylate, n-propyl methacrylate, i-propyl methacrylate, n-butyl methacrylate, i-butyl methacrylate, t-butyl methacrylate, amyl methacrylate, isoamyl methacrylate, octyl methacrylate, 2-ethylhexyl methacrylate, decyl methacrylate, lauryl methacrylate, cyclohexyl methacrylate, benzyl methacrylate, and phenyl methacrylate.

Examples of the N-substituted maleimide include N-cyclohexylmaleimide and N-phenylmaleimide.

Examples of the compound having two or more carbon-carbon double bonds include a compound having two carbon-carbon double bonds such as di(meth)acrylic acid ester of diol, such as allyl methacrylate, ethylene glycol dimethacrylate, 1,3-butanediol dimethacrylate (1,3-butylene glycol dimethacrylate), and 1,6-hexanediol diacrylate, 2-propenyl acrylate and divinylbenzene; and a compound having three or more carbon-carbon double bonds such as triallyl isocyanurate, triallyl cyanurate, and triallyl trimellitate which have an aromatic ring. Among these, the allyl methacrylate, the 2-propenyl acrylate, the triallyl isocyanurate, and the triallyl cyanurate are preferable.

One kind of the other monomers may be used alone and two or more kinds thereof may be used by being mixed.

In a case where the mixture ($\alpha$) contains one or more monomers selected from the group consisting of aromatic vinyl, vinyl cyanide, methacrylic acid ester, N-substituted maleimide, and maleic acid, as the other monomer, the content thereof is preferably more than 0% by mass and less than 19.95% by mass and more preferably more than 0% by mass and less than 10% by mass, with respect to the total (total mass) of the (Aa) component, the (Ab) component, and the other monomer in the mixture ($\alpha$). When the content of the other monomer is within the above range, an original performance of the polymer (A) is prone to be expressed.

In a case where the mixture ($\alpha$) contains the compound having two or more carbon-carbon double bonds as the other monomer, the content thereof is preferably more than 0% by mass and less than 3% by mass, with respect to the total (total mass) of the (Aa) component, the (Ab) component, and the other monomer in the mixture ($\alpha$). When the content of the compound having two or more carbon-carbon double bonds is within the above range, it becomes easy to adjust the degree of swelling of the polymer (A) to be 4 to 20 times and the grafting density of the graft polymer (C) to be described later to $0.065 \text{ mol/nm}^2$ or higher and $0.5 \text{ mol/nm}^2$ or lower. As a result, a molded article to be obtained is further excellent in impact resistance, molding appearance, and injection speed dependence of a molding appearance.

<Method of producing polymer (A)>

The polymer (A) is produced by a known method such as a bulk polymerization method, a solution polymerization method, a bulk suspension polymerization method, a suspension polymerization method, an emulsion polymerization method, or mini-emulsion polymerization. Among these, since the particle size of the polymer (A) can be easily controlled and the graft polymer to be described later can be easily produced, the emulsion polymerization method and the mini-emulsion polymerization are preferable.

The method of producing the polymer (A) by mini-emulsion polymerization is not particularly limited. For example, the method includes a step of adding an aqueous solvent and an emulsifier to the mixture ($\alpha$) and further adding a hydrophobic compound, a radical initiator, a chain transfer agent, and the like thereto as needed, and applying shearing force to an obtained liquid mixture to prepare a pre-emulsion (mini-emulsion) (mini-emulsifying step) and a step of heating an obtained emulsion to a polymerization initiation temperature to be polymerized (polymerization step).

In the mini-emulsifying step, a monomer is removed by the shearing force applied to the liquid mixture, and monomer fine oil droplets covered with the emulsifier are formed. Thereafter, when heated to the polymerization initiation temperature of the radical initiator in the polymerization step, the monomer fine oil droplets are polymerized as they are to obtain polymer fine particles.

Any known method can be used as a method of applying a shearing force for forming a mini-emulsion to the liquid mixture. A high shearing device that applies the shearing force to the liquid mixture is not particularly limited, and examples thereof include an emulsifying device including a high-pressure pump and an interaction chamber, and a device configured to a mini-emulsion by ultrasonic energy or high frequency.

Examples of the emulsifying device including a high-pressure pump and an interaction chamber include a "pressure homogenizer" manufactured by SPX Corporation APV, a "high-pressure homogenizer" manufactured by Sanmaru Machinery Co., Ltd., and a "microfluidizer" manufactured by Powrex corp.

Examples of the device configured to form a mini-emulsion by ultrasonic energy or high frequency include "Sonic Dismulator" manufactured by Fisher Scientific K.K., "ULTRASONIC HOMOGENIZER" manufactured by NISSEI Corporation.

The amount of the aqueous solvent used in the mini-emulsifying step is preferably approximately 100 parts by mass or more and 500 parts by mass or less with respect to the total 100 parts by mass of components other than the aqueous solvent in the liquid mixture, such that a solid content concentration of a reaction solution after the polymerization step becomes approximately 5% by mass or more and 50% by mass or less, from the viewpoint of workability, stability, and manufacturability.

In a case where the polymer (A) is produced by the mini-emulsion polymerization, it is preferable to use the hydrophobic compound in a proportion as described later. When forming a mini-emulsion, if the hydrophobic compound is added, production stability in the mini-emulsion polymerization tends to be further improved, and the polymer (A) suitable for the present invention can be easily produced.

As the hydrophobic compound, a hydrocarbon having 10 or more carbon atoms, an alcohol having 10 or more carbon atoms, a hydrophobic polymer having a mass-average molecular weight (Mw) of less than 10,000, a hydrophobic monomer may be used, and examples thereof include vinyl ester of alcohol having 10 to 30 carbon atoms, vinyl ether of alcohol having 12 to 30 carbon atoms, alkyl (meth)acrylate having 12 to 30 carbon atoms, carboxylic acid vinyl ester having 10 to 30 carbon atoms (preferably 10 to 22 carbon atoms), p-alkylstyrene, a hydrophobic chain transfer agent, and hydrophobic peroxide.

One kind of these hydrophobic compound agents may be used alone and two or more kinds thereof may be used by being mixed.

More particularly, examples of the hydrophobic compound include hexadecane, octadecane, icosane, liquid paraffin, liquid isoparaffin, paraffin wax, polyethylene wax, olive oil, cetyl alcohol, stearyl acrylate, lauryl acrylate, stearyl acrylate, lauryl methacrylate, stearyl methacrylate, a polystyrene having a number-average molecular weight (Mn) of 500 to 10,000, and poly (meth)acrylic acid ester.

An addition amount of the hydrophobic compound is preferably 0.1 parts by mass or more and 10 parts by mass or less and more preferably 1 part by mass or more and 3 parts by mass or less with respect to 100 parts by mass of the mixture ($\alpha$). When the addition amount of the hydrophobic compound is within the above range, the particle size and the particle size distribution of the polymer (A) become easily controlled.

The mini-emulsifying step is usually performed at approximately 10°C to 50°C, and the polymerization step is usually performed at 40°C to 100°C for about 30 to 600 minutes.

Examples of the method of producing the polymer (A) by emulsion polymerization include a method in which a radical initiator, the (Aa) component, and the (Ab) component, and another monomer as needed are added to an aqueous solvent and copolymerized in the presence of an emulsifier. A method of adding the radical initiator, the (Aa) component, the (Ab) component, and the other monomer may be any one of batch, split, and continuous.

Examples of the emulsifier used for the emulsion polymerization and the mini-emulsion polymerization include an anionic surfactant, a nonionic surfactant, and an amphoteric surfactant.

More specifically, examples of the emulsifier include an anionic surfactant such as higher alcohol sulfate, alkylbenzene sulfonate, polyoxyethylene nonylphenyl ether sulfate ester salt, fatty acid sulfonate (such as alkali metal salt of alkylsulfosuccinic acid), phosphates (such as monoglyceride ammonium phosphate), fatty acid salt (such as oleic acid, palmitic acid, stearic acid, alkali metal salt of rosin acid, and alkali metal salt of alkenyl succinic acid), and amino acid derivative salt; a nonionic surfactant such as normal polyethylene glycol alkyl ester type, alkyl ether type, and alkyl phenyl ether type; and an amphoteric surfactant that has carboxylate salt, sulfate ester salt, sulfonate salt, phosphate ester salt, or the like in an anionic portion and has amine salt, quaternary ammonium salt, or the like in a cationic portion.

One kind of these emulsifiers may be used alone and two or more kinds thereof may be used by being mixed.

An addition amount of the emulsifier is preferably more than 0 parts by mass and 10 parts by mass or less, more preferably 0.005 parts by mass or more and 10 parts by mass or less, and from the viewpoint of easier control of the particle size of the polymer (A), further preferably 0.01 parts by mass or more and 5 parts by mass or less, with respect to 100 parts by mass of the mixture ($\alpha$).

As the radical initiator used for the emulsion polymerization, known radical initiators can be used, and examples thereof include an azo polymerization initiator, a photopolymerization initiator, an inorganic peroxide, an organic peroxide, and a redox initiator combining an organic peroxide, transition metal, and a reducing agent. Among these, the azo polymerization initiator, inorganic peroxide, the organic peroxide, and the redox initiator that can initiate polymerization by heating are preferable.

One kind of these radical initiators may be used alone and two or more kinds thereof may be used by being mixed.

Examples of the azo polymerization initiator include 2,2'-azobis(4-methoxy-2,4-dimethylvaleronitrile), 2,2'-azo-bis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo] formamide, 4,4'-azobis(4-cyanovaleric acid), dimethyl 2,2'-azobis(2-methylpropionate), dimethyl 1,1'-azobis(1-cyclohexanecarboxylate), 2,2'-azobis [2-methyl-N-(2-hydroxyethyl)propionamide], 2,2'-azobis(N-butyl-2-methylpropionamide), 2,2'-azobis(N-cyclohexyl-2-methylpropionamide), 2,2'-azobis [2-(2-imidazolin-2-yl)propane], and 2,2'-azobis(2,4,4-trimethylpentane).

Examples of the inorganic peroxide include potassium persulfate, sodium persulfate, ammonium persulfate, and hydrogen peroxide.

Examples of the organic peroxide include a peroxyester compound. Specific examples thereof include $\alpha,\alpha'$-bis(neodecanoylperoxy) diisopropylbenzene, cumylperoxyneodecanoate, 1,1,3,3-tetramethylbutylperoxyneodecanoate, 1-cyclohexyl-1-methylethylperoxyneodecanoate, t-hexylperoxyneodecanoate, t-butylperoxyneodecanoate, t-hexylperoxypivalate, t-butylperoxypivalate, 1,1,3,3-tetramethylbutylperoxy-2-ethylhexanoate, 2,5-dimethyl-2,5-bis(2-ethylhexanoylperoxy) hexane, 1-cyclohexyl-l-methylethylperoxy-2-ethylhexanoate, t-hexylperoxy 2-hexyl hexanoate, t-butylperoxy 2-hexylhexanoate, t-butylperoxyisobutyrate, t-hexylperoxyisopropyl monocarbonate, t-butylperoxymaleic acid, t-butylperoxy 3,5,5-trimethylhexanoate, t-butylperoxylaurate, 2,5-dimethyl-2,5-bis(m-toluoylperoxy) hexane, t-butylperoxyisopropyl monocarbonate, t-butylperoxy 2-ethylhexyl monocarbonate, t-hexylperoxybenzoate, 2,5-dimethyl-2,5-bis(benzoylperoxy) hexane, t-butylperoxyacetate, t-butylperoxy-m-toluoylbenzoate, t-butylperoxybenzoate, bis(t-butylperoxy) isophthalate, 1,1-bis(t-hexylperoxy) 3,3,5-trimethylcyclohexane, 1,1-bis(t-hexylperoxy) cyclohexane, 1,1-bis(t-butylperoxy) 3,3,5-trimethylcyclohexane, 1,1-bis(t-butylperoxy) cyclohexane, 1,1-bis(t-butylperoxy) cyclododecane, 2,2-bis(t-butylperoxy) butane, n-butyl 4,4-bis(t-butylperoxy) valerate, 2,2-bis(4,4-di-t-butylperoxycyclohexyl) propane, $\alpha,\alpha'$-bis(t-butylperoxide) diisopropylbenzene, dicumyl peroxide, 2,5-dimethyl-2,5-bis(t-butylperoxy) hexane, t-butyl cumyl peroxide, di-t-butyl peroxide, cumene hydroperoxide, diisopropylbenzene hydroperoxide, t-butyl hydroperoxide, dilauroyl peroxide, diisononanoyl peroxide, benzoyl peroxide, lauroyl peroxide, dimethyl bis(t-butylperoxy) -3-hexyne, bis(t-butylperoxyisopropyl) benzene, bis(t-butylperoxy) trimethylcyclohexane, butyl-bis(t-butylperoxy) valerate, t-butyl 2-ethylhexaneperoxyate, dibenzoyl peroxide, paramentane hydroperoxide, and t-butylperoxybenzoate.

As the redox initiator, a combination of organic peroxide, ferrous sulfate, a chelating agent, and a reducing agent is preferable. Examples thereof include a combination of cumene hydroperoxide, ferrous sulfate, sodium pyrophosphate, and dextrose, and a combination of t-butyl hydroperoxide, sodium formaldehyde sulfoxylate (Rongalite), ferrous sulfate, and ethylenediaminetetraacetic acid disodium salt.

An addition amount of the radical initiator is preferably more than 0 parts by mass and 5 parts by mass or less, more preferably more than 0 parts by mass and 3 parts by mass or less, and still more preferably 0.001 parts by mass or more and 3 parts by mass or less, with respect to 100 parts by mass of the mixture ($\alpha$).

When the addition amount is within the above range, a molded article to be obtained is excellent in impact resistance and molding appearance, which is preferable.

When producing the polymer (A), a chain transfer agent may be added as needed.

Examples of the chain transfer agent include mercaptans such as octyl mercaptan, n- or t-dodecyl mercaptan, n-hexadecyl mercaptan, n- and t-tetradecyl mercaptan; an allyl compound such as allyl sulfonic acid, methallyl sulfonic acid, and sodium salts thereof; and an $\alpha$-methylstyrene dimer. Among these, from the viewpoint that a molecular weight is easily adjusted, the mercaptans are preferable.

One kind of these chain transfer agents may be used alone and two or more kinds thereof may be used by being mixed.

A method of adding the chain transfer agent may be any one of batch, split, and continuous.

An addition amount of the chain transfer agent is preferably more than 0 parts by mass and 2 parts by mass or less and more preferably 0.01 part by mass or more and 2 parts by mass or less with respect to 100 parts by mass of the mixture ($\alpha$).

When the addition amount is within the above range, a molded article to be obtained is excellent in impact resistance and molding appearance, which is preferable.

The polymer (A) can be used as a composite rubber with a rubber polymer other than the polymer (A) (hereinafter also referred to as "another rubber polymer").

Examples of the other rubber polymer include ethylene/propylene rubber (EPR), ethylene/propylene/non-conjugated diene copolymer (EPDM), ethylene-a olefin copolymer, diene rubber, and polyorganosiloxane.

The composite rubber can be obtained by a known method such as a method of polymerizing the mixture ($\alpha$) in the presence of another rubber polymer, a method of co-enlarging the polymer (A) and another rubber polymer.

<Physical properties>

The degree of swelling of the polymer (A) is represented by a multiplicative increase in mass when an acetone-insoluble fraction of the polymer (A) is immersed in an acetone solvent. The higher degree of swelling represents that a distance between cross-linking points becomes longer and the degree of crosslinking is low. In this case, the polymer (A) is prone to be soft rubber. The degree of swelling of the polymer (A) is preferably 4 to 20 times, more preferably 4 to 15 times, and still more preferably 6 to 11 times. When the degree of the swelling of the polymer (A) is within the above range, a molded article to be obtained is further excellent in impact resistance, molding appearance, and injection speed dependence of a molding appearance.

Specifically, the degree of swelling of the polymer (A) can be measured as follows. That is, first, the weighed polymer (A) is immersed in acetone for 20 hours, and the polymer (A) is swollen with acetone until saturated. Thereafter, the polymer is centrifuged at 14,000 rpm and separated into an acetone-dissolved content and an insoluble fraction swollen with acetone, and the mass of the insoluble fraction swollen with acetone is measured. Next, the insoluble fraction swollen with acetone is vacuum dried and the mass of the insoluble fraction after the drying is measured to determine the degree of swelling of the polymer (A) using the following formula (1).

$$\text{Degree of swelling (times)} = \text{Mass of insoluble fraction swollen with acetone}$$

$$\text{(g)/Mass of insoluble fraction after drying (g)} \cdots (1)$$

Examples of a method of controlling the degree of swelling of the polymer (A) include a method of adjusting the content of the (Ab) component or the compound having two or more carbon-carbon double bonds, contained in the mixture (α).

A volume-average particle size of the polymer (A) is preferably 50 nm or more and 800 nm or less, more preferably 80 nm or more and 700 nm or less, still more preferably 100 nm or more and 600 nm or less, and particularly preferably 250 nm or more and 450 nm or less. When the volume-average particle size of the polymer (A) is within the above range, a molded article to be obtained tends to be further excellent in impact resistance.

The average particle size of the polymer (A) can be calculated from the particle size distribution obtained by measuring a volume-based particle size distribution using a laser diffraction and scattering particle size distribution analyzer.

A method of controlling the volume-average particle size of the polymer is not particularly limited, and a known method can be used. For example, in the production of the polymer (A), there is a method of adjusting an addition amount of emulsifier used during emulsion polymerization or mini-emulsion polymerization, and a method of enlarging latex of the polymer (A) having a small particle size with acid or acid group-containing copolymer latex.

A glass transition temperature of the polymer (A) is preferably -150°C or higher and 0°C or lower, and more preferably -80°C or higher and 0°C or lower. When the glass transition temperature of the polymer (A) is within the above range, a molded article to be obtained tends to be further excellent in impact resistance.

The glass transition temperature of the polymer (A) is a value determined by dynamic viscoelasticity measurement (DMTA). Specifically, the glass transition temperature is a temperature at the peak of tangent loss (tanδ) obtained when the temperature is raised from -100°C by 5°C/min at a frequency of 1Hz.

<Operational effect>

The polymer (A) of the present invention described above is obtained by polymerizing the mixture (α) containing the (Aa) component and the (Ab) component. Accordingly, the polymer (A) of the present invention is capable of obtaining a graft polymer having a high graft ratio while having a low degree of crosslinking. The reason for this is not certain but is considered as follows.

The allyl group in the (Ab) component has low reactivity in a radical addition reaction, but is prone to cause hydrogen abstraction by a radical and obtain a polymerization initiation point. Therefore, when the (Aa) component and the (Ab) component are polymerized, the (Ab) component is prone to be a molecular end of a polymer of the (Aa) component (that is, polyacrylic acid ester). As a result, since the distance between the crosslinking points, which is a distance between the two (Ab) components, becomes longer, the degree of crosslinking of the polymer (A) tends to be lower. Also, since the allyl group of the (Ab) component has low reactivity, the allyl group is hardly consumed during the production of the polymer (A), and the pendant allyl group is prone to remain in the polymer (A). Accordingly, when the polymer (A) of the present invention is used for producing a graft polymer, the graft polymerization tends to proceed easily with the pendant allyl group as a polymerization point. Therefore, the graft polymer obtained using the polymer (A) of the present invention has a high graft ratio.

"Graft polymer"

The graft polymer of the present invention (hereinafter also referred to as a "graft polymer (C)") is obtained by graft polymerization of one or more monomers (hereinafter also referred to as a "monomer (B)") selected from the group consisting of aromatic vinyl, vinyl cyanide, (meth)acrylic acid ester, N-substituted maleimide, and maleic acid to the polymer (A) of the present invention. That is, the graft polymer (C) includes a polymer (A) part and a monomer (B) part obtained by polymerization of the monomer (B).

In the graft polymer (C), it is difficult to specify how the monomer (B) is polymerized to the polymer (A). For example, as the polymer (B), there are those bonded to the polymer (A) and those not bonded to the polymer (A). In addition, it is also difficult to specify a molecular weight, a proportion of structural units, and the like of the polymer (B) bonded to the polymer (A).

That is, there are circumstances (impossible/impractical circumstances) in which it is not possible or almost impractical to specify the graft polymer (C) directly by a structure or a characteristic thereof.

Therefore, in the present invention, it is more appropriate to define the graft polymer (C) as a "polymer obtained by graft polymerizing the monomer (B) to the polymer (A)".

<Polymer (A)>

Since the polymer (A) is the polymer (A) of the present invention described above, descriptions thereof will be omitted.

One kind of the polymer (A) may be used alone and two or more kinds thereof may be used by being mixed.

<Monomer (B)>

The monomer (B) represents one or monomers selected from the group consisting of aromatic vinyl, vinyl cyanide, (meth)acrylic acid ester, N-substituted maleimide, and maleic acid.

The monomer (B) can be selected depending on compatibility with another thermoplastic resin (D) to be described later and the purpose of a molded article. For example, when aromatic vinyl is used as the monomer (B), moldability tends to be good. When vinyl cyanide is used, chemical resistance or impact resistance of a molded article and the compatibility with the other thermoplastic resin (D) having polarity can be improved. When the methacrylic acid ester is used, surface hardness or surface appearance of a molded article can be improved. When the N-substituted maleimide is used, heat resistance can be improved.

Examples of the aromatic vinyl, vinyl cyanide, and N-substituted maleimide include the aromatic vinyl, the vinyl cyanide, and the N-substituted maleimide, among the other monomers exemplified above in the description of the polymer (A).

Examples of the (meth)acrylic acid ester include the methacrylic acid ester, among the (Aa) component of the other monomers exemplified above in the description of the polymer (A).

One kind of these monomers (B) may be used alone and two or more kinds thereof may be used by mixing.

<Method of producing graft polymer (C)>

The graft polymer (C) is obtained by graft polymerizing the monomer (B) to the polymer (A).

The graft polymer (C) is preferably a polymer obtained by graft polymerizing 25% by mass or more and 60% by mass or less of the monomer (B) to 40% by mass or more and 75% by mass or less of the polymer (A) (however, a total of the polymer (A) and the polymer (B) is 100% by mass). A proportion of the polymer (A) is more preferably 45% by mass or more and 70% by mass or less, and a proportion of the monomer (B) is more preferably 30% by mass or more and 55% by mass or less. When the ratio of polymer (A) and monomer (B) is within the above range, productivity of the graft polymer (C) or a thermoplastic resin composition obtained by blending the graft polymer (C) will be good, and a molded article to be obtained tends to be further improved in impact resistance, surface appearance, and thermal stability.

A method of graft polymerizing the monomer (B) to the polymer (A) is not particularly limited. However, since the method of producing the polymer (A) is preferably the emulsion polymerization or the mini-emulsion polymerization, it may be carried out by emulsion graft polymerization.

Examples of the method of emulsion graft polymerization include a method of radical polymerization by adding the monomer (B) at once, continuously, or intermittently in the presence of the emulsion of the polymer (A). In addition, during the graft polymerization, a chain transfer agent may be used for the purpose of controlling the molecular weight or a graft ratio of the graft polymer (C) or a known inorganic electrolyte may be used for the purpose of adjusting the viscosity and pH of the latex. In addition, in the emulsion graft polymerization, various emulsifiers and radical initiators can be used as needed.

A kind or an addition amount of the chain transfer agent, the emulsifier, and the radical initiator is not particularly limited. In addition, examples of the chain transfer agent, the emulsifier, and the radical initiator include the chain transfer agent, the emulsifier, and the radical initiator exemplified above in the description of the polymer (A).

The graft polymer (C) obtained by the emulsion graft polymerization is in a state of being dispersed in an aqueous medium.

Examples of a method for recovering the graft polymer (C) from the aqueous dispersion containing the graft polymer (C) include a precipitation method in which a precipitation agent is added to the aqueous dispersion, heated and stirred, then the precipitation agent is separated therefrom, and the precipitated graft polymer (C) is washed, dehydrated, and dried

Examples of the precipitation agent include aqueous solutions of sulfuric acid, acetic acid, calcium chloride, magnesium sulfate.

One kind of these precipitation agents may be used alone and two or more kinds thereof may be used by being mixed.

<Physical properties>

A graft ratio of the graft polymer (C) is preferably 50% or higher and 150% or less and more preferably 60% or more and 120% or less. When the graft polymer of the content (C) is within the above range, a molded article to be obtained is further excellent in surface appearance and thermal stability.

Specifically, the graft ratio of the graft polymer (C) can be measured as follows. That is, the graft polymer (C) was added to acetone, heated to reflux at 65°C or higher and 70°C or lower for 3 hours, and an obtained suspended acetone solution was centrifuged at 14,000 rpm to be separated into an acetone-soluble fraction and an acetone-insoluble fraction. Next, the acetone-insoluble fraction was vacuum dried and the mass of the acetone-insoluble fraction after the drying was measured to determine the graft ratio of the graft polymer (C) using the following formula (2). In the formula (2), P is the mass (g) of the acetone-insoluble fraction after drying, and Q is the mass (g) of the polymer (A) used for producing the graft polymer (C).

$$\text{Graft ratio } (\%) = \{(P\text{-}Q)/Q\} \times 100 \cdots (2)$$

A grafting density of the graft polymer (C) is preferably 0.065 mol/nm$^2$ or higher and more preferably 0.070 mol/nm$^2$ or higher. When the grafting density of the graft polymer (C) is within the above range, a molded article to be obtained is further excellent in impact resistance, molding appearance, and injection speed dependence of a molding appearance. An upper limit of the grafting density of the graft polymer (C) is not particularly limited, and is preferably 0.500 mol/nm$^2$ and more preferably 0.300 mol/nm$^2$.

Specifically, the grafting density of the graft polymer (C) can be measured as follows. That is, for the acetone-soluble fraction centrifuged in the graft ratio-measuring method, a number-average molecular weight was measured using gel permeation chromatography (GPC), and the number-average molecular weight of the acetone-soluble fraction was measured. The number-average molecular weight of the acetone-soluble fraction, the graft ratio (%), a specific gravity (g/cm$^2$) of the polymer (A), and a volume-average particle size (nm) of the polymer (A) dispersed in the aqueous dispersion are substituted into the following formula (3) to calculate the grafting density (mol/nm$^2$).

$$\text{Grafting density } (\text{mol/nm}^2) = 1/3 \times (\text{Volume-average particle size (nm) of}$$

$$\text{polymer (A)}) \times 1/2 \times \text{Specific gravity of polymer (A) } (\text{g/cm}^3) \times \text{Graft ratio } (\%) \times$$

$$(1/(\text{Number-average molecular weight of acetone-soluble component})) \cdots (3)$$

<Operational effect>

The graft polymer (C) of the present invention described above is obtained by graft polymerizing the monomer (B) to the polymer (A) of the present invention described above, and a polymer (A) part has a high graft ratio while having a low degree of crosslinking. Therefore, the graft polymer (C) of the present invention has a high graft ratio and is suitable as a material of a thermoplastic resin composition capable of obtaining a molded article excellent in impact resistance, surface appearance, and thermal stability.

"Thermoplastic resin composition"

The thermoplastic resin composition of the present invention includes the graft polymer (C) of the present invention, and a thermoplastic resin other than the graft polymer (C) (hereinafter also referred to as "another thermoplastic resin (D)").

The thermoplastic resin composition of the present invention may contain optional components such as various additives as needed within the range not impairing the effects of the present invention.

<Graft polymer (C)>

Since the graft polymer (C) contained in the thermoplastic resin composition is the graft polymer (C) of the present invention described above, descriptions thereof will be omitted.

One kind of the graft polymer (C) may be used alone and two or more kinds thereof may be used in combination.

<Another thermoplastic resin (D)>

The other thermoplastic resin (D) is not particularly limited, and examples thereof include acrylic resin (PMMA), acrylonitrile-styrene copolymer (AS resin), polycarbonate resin, polybutylene terephthalate (PBT resin), methyl methacrylate-styrene copolymer resin (MS resin), polyethylene terephthalate (PET resin), polyvinyl chloride, polystyrene, polyacetal resin, modified polyphenylene ether (modified PPE resin), ethylene-vinyl acetate co-polymer, polyarylate, liquid crystal polyester resin, polyethylene resin, polypropylene resin, fluoropolymer, and polyamide resin (nylon).
One kind of these thermoplastic resins (D) may be used alone and two or more kinds thereof may be used by being mixed.

<Optional components>

Examples of the various additives include a lubricant, a pigment, dye, a filler (such as carbon black, silica, and titanium oxide), a heat resistance agent, an oxidative degradation inhibitor, a weathering agent, a release agent, a plasticizer, and an antistatic agent.

<Content of each component>

The content of the graft polymer (C) is preferably 5% by mass or more and 70% by mass or less, and more preferably 10% by mass or more and 50% by mass or less, with respect to the total mass of the graft polymer (C) and the other thermoplastic resin (D). When the content of the graft polymer (C) is equal to or more than the lower limit, a molded article to be obtained is further excellent in impact resistance. On the other hand, when the content of the graft polymer (C) is equal to or less than the upper limit, functions inherent to the other thermoplastic resin (D) can be sufficiently exhibited. For example, in a case where an acrylic resin is used as the other thermoplastic resin (D), the hardness of the molded article tends to increase. In a case where the polycarbonate resin is used as the other thermoplastic resin (D), the heat resistance of the molded article tends to be high.
The content of the other thermoplastic resin (D) is preferably 30% by mass or more and 95% by mass or less, and more preferably 50% by mass or more and 90% by mass or less, with respect to the total mass of the graft polymer (C) and the other thermoplastic resin (D). When the content of the other thermoplastic resin (D) is equal to or more than the lower limit, functions inherent to the other thermoplastic resin (D) can be sufficiently exhibited. On the other hand, when the content of the other thermoplastic resin (D) is equal to or lower than the upper limit, a molded article to be obtained is further excellent in impact resistance.
A total content of the graft polymer (C) and the other thermoplastic resin (D) is preferably 50% by mass or more and 100% by mass or less, and more preferably 80% by mass or more and 100% by mass or less, with respect to the total mass of the other thermoplastic resin composition.

<Method of producing thermoplastic resin composition>

The thermoplastic resin composition can be produced by a known method using a known device, by using the graft polymer (C) and the other thermoplastic resin (D), and the optional component as needed. Examples of a general method include a melt mixing method and examples of a device used in this method include an extruder, a Banbury mixer, a roller, and a kneader. Either a batch type or a continuous type may be employed for mixing. In addition, a mixing order or the like of each component is not particularly limited as long as all the components may be mixed uniformly.
The optional components may be added when the thermoplastic resin composition is molded.

<Operational effect>

Since the thermoplastic resin composition of the present invention described above includes the graft polymer (C) of the present invention described above and the other thermoplastic resin (D), a molded article excellent in impact resistance, surface appearance, and thermal stability can be obtained.

"Molded article"

A molded article is obtained by molding the thermoplastic resin composition of the present invention by a known molding method.
Examples of the molding method include an injection molding method, an injection compression molding machine method, an extrusion method, a blow molding method, a vacuum molding method, a compressed air molding method, a calendar molding method, and an inflation molding method.

Among these, the injection molding method and the injection compression molding method are preferable since these are excellent in mass productivity and can obtain a molded article with high dimensional accuracy.

The molded article obtained according to the present invention is excellent in impact resistance, surface appearance, and thermal stability.

EXAMPLES

Hereinafter, specific examples will be shown. However, the present invention is not limited to the following examples.

In the following description, "%" means "% by mass", and "part(s)" means "part(s) by mass".

Various measurement and evaluation methods in the following examples are as follows.

"Measurement and evaluation"

<Method of measuring volume-average particle size>

For the polymer (A), the volume-average particle size (MV) was measured using a microtrack ("Nanotrac 150" manufactured by Nikkiso Co., Ltd.) and using pure water as a measurement solvent.

<Method of measuring degree of swelling>

Latex of the polymer (A) was coagulated with methanol and sulfuric acid, washed with methanol, and then vacuum dried. The polymer (A) after the drying was weighed and immersed in acetone for 20 hours. The polymer (A) was swollen with acetone until saturated. Thereafter, the polymer was centrifuged at 14,000 rpm and separated into an acetone-dissolved content and an insoluble fraction swollen with acetone, and the mass of the insoluble fraction swollen with acetone was measured. Next, the insoluble fraction swollen with acetone was vacuum dried, and the mass of the insoluble fraction after the drying was measured to determine the degree of swelling of the polymer (A) using the following formula (1). A higher degree of swelling means a lower degree of crosslinking.

$$\text{Degree of swelling (times)} = \text{Mass of insoluble fraction swollen with acetone}$$

$$\text{(g)/Mass of insoluble fraction after drying (g)} \cdots (1)$$

<Method of measuring graft ratio>

The graft polymer (C) was washed with methanol, then added to acetone, and heated to reflux at 65°C for 3 hours. An obtained suspended acetone solution was centrifuged at 14,000 rpm for 30 minutes with a centrifuge ("CR21E" manufactured by Hitachi Koki Co,. Ltd.) to be separated into an acetone-soluble fraction and an acetone-insoluble fraction. Next, the acetone-insoluble fraction was vacuum dried and the mass of the acetone-insoluble fraction after the drying was measured to determine the graft ratio of the graft polymer (C) using the following formula (2). In the formula (2), P is the mass (g) of the acetone-insoluble fraction after drying, and Q is the mass (g) of the polymer (A) used for producing the graft polymer (C).

$$\text{Graft ratio (\%)} = \{(P-Q)/Q\} \times 100 \cdots (2)$$

<Method of measuring grafting density>

For the acetone-soluble fraction centrifuged in the graft ratio-measuring method described above, a number-average molecular weight was measured using gel permeation chromatography (GPC). Specifically, the acetone-soluble fraction was diluted with tetrahydrofuran (THF) as a solvent to be introduced into a GPC device. A molecular weight in terms of polystyrene of the acetone-soluble fraction was measured using a calibration curve obtained in advance with a standard polystyrene having a known molecular weight to determine the number-average molecular weight. Thus, the number-average molecular weight of the acetone-soluble fraction, the graft ratio (%), the specific gravity (g/cm$^2$) of the polymer (A), and the volume-average particle size (nm) of the polymer (A) dispersed in the aqueous dispersion were substituted into the following formula (3) to calculate the grafting density (mol/nm$^2$).

$$\text{Grafting density (mol/nm}^2) = 1/3 \times \text{(Volume-average particle size (nm) of}$$

$$\text{polymer (A))} \times 1/2 \times \text{Specific gravity of polymer (A) (g/cm}^3) \times \text{Graft ratio (\%)} \times$$

$$(1/(\text{Number-average molecular weight of acetone-soluble component})) \cdots (3)$$

<Evaluation of impact resistance>

Pellets of the thermoplastic resin composition were molded by an injection molding machine ("IS55FP-1.5A", manufactured by Toshiba Machine Co., Ltd.,) under conditions of a cylinder temperature of 200°C to 270°C, a mold temperature of 60°C, and an injection speed of 25 g/sec. A molded article (i) having a length of 80 mm, a width of 10 mm, and a thickness of 4 mm was obtained.

The obtained molded article (i) was subjected to a Charpy impact test (with a V notch of 4 mm thickness) under conditions at 23°C in accordance with ISO 179 standard, and the Charpy impact strength was measured.

<Evaluation of surface appearance>

Pellets of the thermoplastic resin composition were injection molded by an injection molding machine ("IS55FP-1.5A", manufactured by Toshiba Machine Co., Ltd.,) at a cylinder temperature of 200°C to 270°C, a mold temperature of 60°C, and an injection speed of 40 g/sec. A molded article (ii) having a length of 100 mm, a width of 100 mm, and a thickness of 2 mm was obtained.

For the obtained molded article (ii), a reflectance (%) of the surface of the molded article (ii) at an incident angle of 60° and a reflection angle of 60° was measured using a gloss meter. The higher reflectance means a further excellent surface appearance.

<Evaluation of thermal stability>

Pellets of the thermoplastic resin composition were retained at 230°C for 20 minutes in the injection molding machine ("IS55FP-1.5A" manufactured by Toshiba Machine Co., Ltd.), and then continuously injection-molded at a cylinder temperature of 200°C to 270°C, a mold temperature of 60°C, and an injection speed of 40 g/sec into a molded article having a length of 100 mm, a width of 100 mm, and a thickness of 2 mm. A molded article at fifth shot was obtained as a molded article (iii).

For the obtained molded article (iii), a reflectance (%) of the surface of the molded article (iii) at an incident angle of 60° and a reflection angle of 60° was measured using a gloss meter to determine gloss retention by the following formula (4). The higher gloss retention means further excellent thermal stability.

$$\text{Gloss retention (\%)} = \text{(Reflectance of molded article (iii)/Reflectance of molded}$$

$$\text{article (ii))} \times 100 \cdots (4)$$

<Measurement of fluidity (melt volume rate: MVR)>

The MVR of the thermoplastic resin composition at 220°C was measured with a load of 98 N (10 kg), in accordance with the ISO 1133: 1997 standard. The MVR is used as a fluidity standard of the thermoplastic resin composition, and a larger value means excellent fluidity.

<Appearance evaluation of molding condition dependence>

(Appearance evaluation (1) of molded article)

Pellets of the thermoplastic resin composition were injection molded by an injection molding machine ("IS55FP-1.5A", manufactured by Toshiba Machine Co., Ltd.,) at a cylinder temperature of 200°C to 270°C, a mold temperature of 60°C, and an injection speed of 7g/sec. A molded article (iv) having a length of 100 mm, a width of 100 mm, and a thickness of 3 mm was obtained.

For the obtained molded article (iv), lightness L* was measured by a SCE method using a spectrocolorimeter ("CM-3500d" manufactured by Konica Minolta Optics Co., Ltd.). The L* measured in this manner is referred to as "L* (iv)". The lower the L*, the blacker the color. This means that the appearance is good.

(Appearance evaluation (2) of molded article)

Pellets of the thermoplastic resin composition were injection molded by an injection molding machine ("IS55FP-1.5A", manufactured by Toshiba Machine Co., Ltd.,) at a cylinder temperature of 200°C to 270°C, a mold temperature of 60°C, and an injection speed of 128g/sec. A molded article (v) having a length of 100 mm, a width of 100 mm, and a thickness of 3 mm was obtained.

For the obtained molded article (v), the lightness L* was measured by the SCE method using a spectrocolorimeter ("CM-3500d" manufactured by Konica Minolta Optics Co., Ltd.). The L* measured in this manner is referred to as "L*(v)".

When molding is performed under a condition of a high injection speed, the rubber component in the resin is oriented to cause whitening and bronzing, and L* tends to increase. Therefore, the molding appearance under a condition of high injection speed is important. The lower the L*, the blacker the color. This means that the appearance is good.

(Appearance evaluation (3) of molded article)

A difference (ΔL* = L* (v) - L* (iv)) between L* of the molded article (iv) and L* of the molded article (v) was determined.

In general, in a molded article such as a vehicle part, the injection speed differs depending on a part location. Therefore, in a case of a resin having a large injection speed dependence, appearance defects such as uneven color on the part surface during molding occur. As the ΔL* becomes smaller, color unevenness caused by a shape or the like of the molded article hardly occurs, which means that a molding condition dependence (injection speed dependence) of a molding appearance is smaller.

"Example 1-1"

<Production of polymer (A)>

300 parts of deionized water, 1 part of dipotassium alkenyl succinate, 0.2 parts of t-butyl hydroperoxide, and 99.7 parts of butyl acrylic acid as the (Aa) component, and 0.3 parts of pentaerythritol triallyl ether as the (Ab) component were added to a reaction vessel including a reagent injection vessel, a condenser, a jacket heater, and a stirrer. The inside of the reaction vessel was replaced with nitrogen for 1 hour, and then the temperature was raised to 55°C.

Next, 0.3 parts of sodium formaldehyde sulfoxylate, 0.0001 parts of ferrous sulfate heptahydrate, 0.0003 parts of disodium ethylenediaminetetraacetate, and 10 parts of deionized water were added to the reaction vessel to initiate the polymerization. After polymerization heat generation was confirmed, the jacket temperature was set to 75°C and polymerization was continued until no polymerization heat generation was confirmed. Further, this state was maintained for 1 hour. Accordingly, latex of a polymer (A1) was obtained.

The obtained polymer (A1) had a volume-average particle size of 113 nm and a degree of swelling of 18 times.

<Production of graft polymer (C)>

A reaction vessel including a reagent injection vessel, a condenser, a jacket heater, and a stirrer was charged with 230 parts of deionized water, 50 parts of the latex of the polymer (A1) in terms of solid content, 0.5 parts of dipotassium alkenyl succinate, and 0.3 parts of sodium formaldehyde sulfoxylate. The inside of the reaction vessel was replaced with nitrogen for 1 hour, and then the temperature was raised to 70°C while stirring. The charging amount of the deionized water includes the mass of deionized water in the latex of the polymer (A1).

Next, a mixed liquid including 15 parts of acrylonitrile, 35 parts of styrene, and 0.5 parts of t-butyl hydroperoxide was added dropwise over 100 minutes and a temperature thereof was raised to 80°C. After completion of the dropwise addition, the mixture was kept at 80°C and then cooled to obtain latex of a graft polymer (C1). Next, the latex of the graft polymer (C1) was coagulated with a 1.5% sulfuric acid aqueous solution, dehydrated, washed, and dried to obtain a powdery graft polymer (C1).

A graft ratio of the obtained graft polymer(C1) was 54%.

"Example 1-2 to 1-4"

Polymers (A2) to (A4) were obtained in the same manner as in Example 1-1, except that the charging amounts of the butyl acrylate and the pentaerythritol triallyl ether were changed as shown in Table 1. For the polymers (A2) to (A4), the volume-average particle size and the degree of swelling were measured. Results are shown in Table 1.

Graft polymers (C2) to (C4) were obtained in the same manner as in Example 1-1, except that the obtained polymers (A2) to (A4) were used. For the graft polymers (C2) to (C4), the graft ratio was measured. Results are shown in Table 1.

"Examples 2-1 to 2-4, 3-1 to 3-4, and 4-1 to 4-4"

Polymers (A5) to (A16) were obtained in the same manner as in Example 1-1, except that the kinds of polyfunctional compounds shown in Tables 1 and 2 were used as the (Ab) component and the charging amounts of the butyl acrylate and the polyfunctional compound were changed as shown in Tables 1 and 2. For the polymers (A5) to (A16), the volume-average particle size and the degree of swelling were measured. Results are shown in Tables 1 and 2.

Graft polymers (C5) to (C16) were obtained in the same manner as in Example 1-1, except that the obtained polymers (A5) to (A16) were used. For the graft polymers (C5) to (C16), the graft ratio was measured. Results are shown in Tables 1 and 2.

"Comparative Examples 1-1 to 1-4, 2-1 to 2-4, 3-1 to 3-4, 4-1 to 4-4, and 5-1 to 5-4"

Polymers (A17) to (A36) were obtained in the same manner as in Example 1-1, except that the kinds of polyfunctional compounds shown in Tables 3 and 4 were used as the (A2) component and the charging amounts of the butyl acrylate and the polyfunctional compound were changed as shown in Tables 3 and 4. For the polymers (A17) to (A36), the volume-average particle size and the degree of swelling were measured. Results are shown in Tables 3 and 4.

Graft polymers (C17) to (C36) were obtained in the same manner as in Example 1-1, except that the obtained polymers (A17) to (A36) were used. For the graft polymers (C17) to (C36), the graft ratio was measured. Results are shown in Tables 3 and 4.

[Table 1]

| | | | Example | | | | | | | |
|---|---|---|---|---|---|---|---|---|---|---|
| | | | 1-1 | 1-2 | 1-3 | 1-4 | 2-1 | 2-2 | 2-3 | 2-4 |
| Polymer (A) | | | A1 | A2 | A3 | A4 | A5 | A6 | A7 | A8 |
| Composition | (Aa) component | Butyl acrylate [part(s)] | 99.7 | 99.4 | 98.8 | 98.2 | 99.7 | 99.4 | 98.8 | 98.2 |
| | (Ab) component | Kind | Ab-1 | Ab-1 | Ab-1 | Ab-1 | Ab-2 | Ab-2 | Ab-2 | Ab-2 |
| | | Amount [part(s)] | 0.3 | 0.6 | 1.2 | 1.8 | 0.3 | 0.6 | 1.2 | 1.8 |
| Volume-average particle size [nm] | | | 113 | 114 | 117 | 121 | 114 | 113 | 115 | 114 |
| Degree of swelling [times] | | | 18 | 14 | 12 | 11 | 18 | 13 | 11 | 10 |
| Graft polymer (C) | | | C1 | C2 | C3 | C4 | C5 | C6 | C7 | C8 |
| Composition | Polymer (A) [part(s)] | | 50 | 50 | 50 | 50 | 50 | 50 | 50 | 50 |
| | Monomer (B) | Acrylonitrile [part(s)] | 15 | 15 | 15 | 15 | 15 | 15 | 15 | 15 |
| | | Styrene [part(s)] | 35 | 35 | 35 | 35 | 35 | 35 | 35 | 35 |
| Graft ratio [%] | | | 54 | 65 | 75 | 83 | 51 | 62 | 74 | 80 |

[Table 2]

| | | | Example | | | | | | | |
|---|---|---|---|---|---|---|---|---|---|---|
| | | | 3-1 | 3-2 | 3-3 | 3-4 | 4-1 | 4-2 | 4-3 | 4-4 |
| Polymer (A) | | | A9 | A10 | A11 | A12 | A13 | A14 | A15 | A16 |
| Composition | (Aa) component | Butyl acrylate [part(s)] | 99.4 | 99.1 | 98.8 | 98.2 | 99.4 | 99.1 | 98.8 | 98.2 |
| | (Ab) component | Kind | Ab-3 | Ab-3 | Ab-3 | Ab-3 | Ab-4 | Ab-4 | Ab-4 | Ab-4 |
| | | Amount [part(s)] | 0.6 | 0.9 | 1.2 | 1.8 | 0.6 | 0.9 | 1.2 | 1.8 |

(continued)

| | | Example | | | | | | | |
|---|---|---|---|---|---|---|---|---|---|
| | | 3-1 | 3-2 | 3-3 | 3-4 | 4-1 | 4-2 | 4-3 | 4-4 |
| Volume-average particle size [nm] | | 114 | 117 | 118 | 124 | 115 | 116 | 119 | 123 |
| Degree of swelling [times] | | 15 | 13 | 12 | 11 | 15 | 13 | 11 | 10 |
| Graft polymer (C) | | C9 | C10 | C11 | C12 | C13 | C14 | C15 | C16 |
| Composition | Polymer (A) [part(s)] | 50 | 50 | 50 | 50 | 50 | 50 | 50 | 50 |
| | Monomer (B) Acrylonitrile [part(s)] | 15 | 15 | 15 | 15 | 15 | 15 | 15 | 15 |
| | Monomer (B) Styrene [part(s)] | 35 | 35 | 35 | 35 | 35 | 35 | 35 | 35 |
| Graft ratio [%] | | 52 | 58 | 64 | 75 | 50 | 56 | 60 | 71 |

[Table 3]

| | | | Comparative Example | | | | | | | |
|---|---|---|---|---|---|---|---|---|---|---|
| | | | 1-1 | 1-2 | 1-3 | 1-4 | 2-1 | 2-2 | 2-3 | 2-4 |
| Polymer (A) | | | A17 | A18 | A19 | A20 | A21 | A22 | A23 | A24 |
| Composition | (Aa) component | Butyl acrylate [part(s)] | 99.7 | 99.4 | 99.1 | 98.8 | 99.7 | 99.4 | 99.1 | 98.8 |
| | (Ab) component | Kind | Ab-5 | Ab-5 | Ab-5 | Ab-5 | Ab-6 | Ab-6 | Ab-6 | Ab-6 |
| | (Ab) component | Amount [part(s)] | 0.3 | 0.6 | 0.9 | 1.2 | 0.3 | 0.6 | 0.9 | 1.2 |
| Volume-average particle size [nm] | | | 108 | 110 | 116 | 117 | 112 | 111 | 113 | 112 |
| Degree of swelling [times] | | | 12 | 8 | 4 | 3 | 11 | 9 | 4 | 3 |
| Graft polymer (C) | | | C17 | C18 | C19 | C20 | C21 | C22 | G23 | C24 |
| Composition | Polymer (A) [part(s)] | | 50 | 50 | 50 | 50 | 50 | 50 | 50 | 50 |
| | Monomer (B) | Acrylonitrile [part(s)] | 15 | 15 | 15 | 15 | 15 | 15 | 15 | 15 |
| | Monomer (B) | Styrene [part(s)] | 35 | 35 | 35 | 35 | 35 | 35 | 35 | 35 |
| Graft ratio [%] | | | 8 | 12 | 18 | 27 | 8 | 11 | 17 | 24 |

[Table 4]

| | | | Comparative Example | | | | | | | | | | | |
|---|---|---|---|---|---|---|---|---|---|---|---|---|---|---|
| | | | 3-1 | 3-2 | 3-3 | 3-4 | 4-1 | 4-2 | 4-3 | 4-4 | 5-1 | 5-2 | 5-3 | 5-4 |
| Polymer (A) | | | A25 | A26 | A27 | A28 | A29 | A30 | A31 | A32 | A33 | A34 | A35 | A36 |
| Composition | (Aa) component | Butyl acrylate [part (s)] | 99.7 | 99.4 | 98.8 | 98.2 | 99.7 | 99.4 | 99.1 | 98.8 | 99.7 | 99.4 | 99.1 | 98.8 |
| | (Ab) component | Kind | Ab-7 | Ab-7 | Ab-7 | Ab-7 | Ab-8 | Ab-8 | Ab-8 | Ab-8 | Ab-9 | Ab-9 | Ab-9 | Ab-9 |
| | | Amount [part(s)] | 0.3 | 0.6 | 1.2 | 1.8 | 0.3 | 0.6 | 0.9 | 1.2 | 0.3 | 0.6 | 0.9 | 1.2 |
| Volume-average particle size [nm] | | | 112 | 113 | 112 | 116 | 109 | 112 | 113 | 112 | 112 | 113 | 115 | 114 |
| Degree of swelling [times] | | | 20 | 13 | 6 | 5 | 16 | 8 | 6 | 5 | 16 | 9 | 7 | 5 |
| Graft polymer (C) | | | C25 | C26 | C27 | C28 | C29 | C30 | C31 | C32 | C33 | C34 | C35 | C36 |
| Composition | Polymer (A) [part(s)] | | 50 | 50 | 50 | 50 | 50 | 50 | 50 | 50 | 50 | 50 | 50 | 50 |
| | Monomer (B) | Acrylonitrile [part(s)] | 15 | 15 | 15 | 15 | 15 | 15 | 15 | 15 | 15 | 15 | 15 | 15 |
| | | Styrene [part(s)] | 35 | 35 | 35 | 35 | 35 | 35 | 35 | 35 | 35 | 35 | 35 | 35 |
| Graft ratio [%] | | | 10 | 30 | 53 | 67 | 22 | 48 | 60 | 65 | 20 | 46 | 58 | 66 |

Abbreviations in Tables 1 to 4 are as follows.
• Ab-1: Pentaerythritol triallyl ether
• Ab-2: Trimethylolpropane triallyl ether
• Ab-3: Pentaerythritol diallyl ether
• Ab-4: Trimethylolpropane diallyl ether
• Ab-5: Pentaerythritol triacryloyl
• Ab-6: Trimethylolpropane triacryloyl
• Ab-7: Allyl methacrylate
• Ab-8: Triallyl isocyanurate
• Ab-9: Triallyl cyanurate

As is clear from Tables 1 and 2, the polymer (A) in each example using a branched polyfunctional compound having two or more allyl groups in which all carbon-carbon double bonds are derived from the allyl groups had a high degree of swelling, that is, a low degree of crosslinking. In addition, the graft polymer (C) obtained using the polymer (A) in each example has a high graft ratio.

In this manner, according to the present invention, the polymer (A) capable of achieving a high graft ratio when grafted while having a low degree of crosslinking is obtained.

On the other hand, as is clear from Tables 3 and 4, in a case of Comparative Examples 1-1 to 1-4 and 2-1 to 2-4 using a polyfunctional compound having no allyl group, the degree of crosslinking of the polymer (A) is high and the graft ratio of the graft polymer (C) was low.

In a case of Comparative Examples 3-1 to 3-4 using a polyfunctional compound having a carbon-carbon double bond derived from a methacryloyl group in addition to the carbon-carbon double bond derived from the allyl group, when the degree of crosslinking of the polymer (A) was low, the graft ratio of the graft polymer (C) was low, and when the graft polymer (C) having a high graft ratio was attempted to be obtained, the degree of crosslinking of the polymer (A) also tended to increase.

In a case of Comparative Examples 4-1 to 4-4 and 5-1 to 5-4 using a polyfunctional compound having three allyl groups but having a cyclic structure rather than the branched chain, when the degree of crosslinking of the polymer (A) was low, the graft ratio of the graft polymer (C) was low, and when the graft polymer (C) having a high graft ratio was attempted to be obtained, the degree of crosslinking of the polymer (A) also tended to increase.

"Examples 5 to 13"

Using kinds of the polymer (A) shown in Table 5, kinds of the graft polymers (C) as shown in Table 5 were obtained in the same manner as in Example 1-1.

40 parts of the obtained graft polymer (C) and 60 parts of acrylonitrile-styrene copolymer ("AXS Resin 202N" manufactured by UMG ABS Co., Ltd.) as the other thermoplastic resin (D) were mixed together and melt kneaded at 220°C using a twin screw extruder ("Tex-28V" manufactured by Nippon Steel Works, Ltd.) to obtain a pellet-like thermoplastic resin composition.

For a molded article obtained by injection molding the obtained thermoplastic resin composition, impact resistance, surface appearance, and thermal stability were evaluated. Results are shown in Table 5.

"Comparative Examples 6 to 17"

Using kinds of the polymer (A) shown in Table 6, kinds of the graft polymers (C) as shown in Table 6 were obtained in the same manner as in Example 1-1.

40 parts of the obtained graft polymer (C) and 60 parts of acrylonitrile-styrene copolymer ("AXS Resin 202N" manufactured by UMG ABS Co., Ltd.) as the other thermoplastic resin (D) were melt kneaded at 220°C using a twin screw extruder ("Tex-28V" manufactured by Nippon Steel Works, Ltd.) to obtain a pellet-like thermoplastic resin composition.

For a molded article obtained by injection molding the obtained thermoplastic resin composition, impact resistance, surface appearance, and thermal stability were evaluated. Results are shown in Table 6.

[Table 5]

| | | Example | | | | | | | | |
|---|---|---|---|---|---|---|---|---|---|---|
| | | 5 | 6 | 7 | 8 | 9 | 10 | 11 | 12 | 13 |
| Polymer (A) | | A2 | A3 | A4 | A7 | A8 | A11 | A12 | A15 | A16 |
| Graft polymer (C) | | C2 | C3 | C4 | C7 | G8 | C11 | C12 | C15 | C16 |
| Impact resistance | Charpy impact strength [kJ/m$^2$] | 5 | 6 | 7 | 6 | 7 | 6 | 6 | 6 | 7 |
| Surface appearance | Reflectance (%) | 93 | 93 | 94 | 92 | 93 | 89 | 91 | 91 | 93 |
| Thermal stability | Gloss retention (%) | 88 | 93 | 95 | 89 | 92 | 85 | 90 | 80 | 90 |

EP 3 650 477 A1

[Table 6]

| | | Comparative Example | | | | | | | | | | | |
|---|---|---|---|---|---|---|---|---|---|---|---|---|---|
| | | 6 | 7 | 8 | 9 | 10 | 11 | 12 | 13 | 14 | 15 | 16 | 17 |
| Polymer (A) | | A19 | A20 | A23 | A24 | A26 | A27 | A28 | A30 | A31 | A32 | A35 | A36 |
| Graft polymer (C) | | C19 | C20 | C23 | C24 | C26 | C27 | C28 | C30 | C31 | C32 | C35 | C36 |
| Impact resistance | Charpy impact strength [kJ/m$^2$] | 2 | 2 | 2 | 2 | 5 | 5 | 4 | 6 | 5 | 4 | 5 | 4 |
| Surface appearance | Reflectance (%) | 76 | 78 | 77 | 79 | 89 | 93 | 92 | 92 | 93 | 93 | 92 | 92 |
| Thermal stability | Gloss retention (%) | 15 | 23 | 15 | 22 | 30 | 65 | 72 | 47 | 67 | 70 | 63 | 70 |

As is clear from Table 5, the molded article obtained in each example was excellent in impact resistance, surface appearance, and thermal stability.

On the other hand, as is clear from Table 6, in a case of each comparative example, it is difficult to make the impact resistance compatible with the thermal stability. There was no molded article obtained in each comparative example satisfying all the impact resistance, the surface appearance, and the thermal stability.

"Example 14-1"

<Production of polymer (A)>

A reactor including a reagent injection vessel, a condenser, a jacket heater, and a stirrer was charged with 400 parts of deionized water, 99.0 parts of n-butyl acrylate as the(Aa) component, 1.0 part of pentaerythritol triallyl ether as the (Ab) component, 0.10 parts of 1,3-butylene glycol dimethacrylate and 0.20 parts of allyl methacrylate as the other monomers, 0.33 parts of dipotassium alkenyl succinate, 0.6 parts of liquid paraffin as the hydrophobic compound, and 0.6 parts of dilauroyl peroxide and subjected to ultrasonic treatment for 20 minutes at an amplitude of 35 $\mu$m using "ULTRASONIC HOMOGENIZER US-600" manufactured by NISSEI Corporation at a normal temperature to obtain a pre-emulsion (mini-emulsifying step). The volume-average particle size of the obtained latex was 350 nm.

The pre-emulsion was heated to 60°C to initiate radical polymerization. Due to the polymerization, a liquid temperature was raised to 78°C. The temperature was maintained at 75°C for 30 minutes to complete the polymerization (polymerization step). A polymer (A37) which was dispersed in an aqueous dispersion, and had a volume-average particle size of 300 nm and a degree of swelling of 5.1 times was obtained.

<Production of graft polymer (C)>

After producing the polymer (A37), while maintaining the internal temperature of the reactor at 75°C, an aqueous solution including 0.001 parts of ferrous sulfate, 0.003 parts of ethylenediaminetetraacetic acid disodium salt, 0.3 parts of Rongalite, and 5 parts of ion-exchanged water was added to 60 parts of the polymer (A37) (as a solid content), and then an aqueous solution including 0.65 parts of dipotassium alkenyl succinate and 10 parts of ion-exchanged water was added thereto. Thereafter, a liquid mixture including 13.6 parts of acrylonitrile, 26.4 parts of styrene, and 0.18 parts of t-butyl hydroperoxide was added dropwise over one and a half hours and graft polymerized.

After completion of the dropwise addition, the internal temperature was kept at 75°C for 10 minutes, then cooled. At the time when the internal temperature reached 60°C, an aqueous solution in which 0.2 parts of antioxidant ("ANTAGE W500" manufactured by Kawaguchi Chemical Industry Co., Ltd.) and 0.2 parts of dipotassium alkenyl succinate were dissolved in 5 parts of ion-exchanged water was added to obtain an aqueous dispersion of a reaction product. Next, the aqueous dispersion of the reaction product was coagulated with an aqueous sulfuric acid solution, washed with water, and dried to obtain a graft polymer (C37). A graft ratio of the obtained graft polymer (C37) was 54%, and the grafting density thereof was 0.069 mol/nm$^2$.

"Examples 14-2 to 14-7"

Polymers (A38) to (A43) dispersed in the aqueous dispersion were obtained in the same manner as in Example 14-1, except that the charging amounts of the n-butyl acrylate, pentaerythritol triallyl ether, 1,3-butylene glycol dimethacrylate, allyl methacylate, and the dipotassium alkenyl succinate were changed as shown in Tables 7 and 8. For the polymers (A38) to (A43), the volume-average particle size and the degree of swelling were measured. Results are shown in Tables 7 and 8.

The graft polymers (C38) to (C43) were obtained in the same manner as in Example 14-1, except that the obtained polymers (A38) to (A43) were used. For the graft polymers (C38) to (C43), the graft ratio and grafting density were measured. Results are shown in Tables 7 and 8.

"Example 14-8"

A mixture of 0.33 parts of dipotassium alkenyl succinate, 175 parts of ion-exchanged water, 98.8 parts of n-butyl acrylate as the (Aa) component, 1.2 parts of pentaerythritol triallyl ether as the (Ab) component, and 0.10 parts of 1,3-butylene glycol dimethacrylate as the other monomer, and 0.1 parts of t-butyl hydroperoxide was put into a reactor. The inside of the reactor was purged with nitrogen by passing a nitrogen stream through the reactor and then a temperature thereinside was raised to 60°C. Thereafter, at the time when the temperature inside the reactor reached 50°C, an aqueous solution including 0.00015 parts of ferrous sulfate, 0.00045 parts of disodium ethylenediaminetetraacetate, 0.24 parts of Rongalite, and 5 parts of ion-exchanged water was added to initiate polymerization. The internal temperature was raised to 75°C. Furthermore, this state was maintained for one hour. A polymer (A44) which was dispersed in an aqueous dispersion, and had a volume-average particle size of 300 nm and a degree of swelling of 7.3 times was obtained.

A graft polymer (C44) was obtained in the same manner as in Example 14-1, except that the obtained polymer (A44) was used. For the graft polymer (C44), the graft ratio and the grafting density were measured. Results are shown in Table 8.

[Table 7]

| | | | Example | | | |
|---|---|---|---|---|---|---|
| | | | 14-1 | 14-2 | 14-3 | 14-4 |
| Polymer (A) | | | A37 | A38 | A39 | A40 |
| Composition | (Aa) component | Butyl acrylate [part(s)] | 99.0 | 98.8 | 98.8 | 98.8 |
| | (Ab) component | pentaerythritol triallyl ether [part(s)] | 1.0 | 1.2 | 1.2 | 1.2 |
| | Another monomer | 1,3-butylene glycol dimethacrylate [part(s)] | 0.10 | 0.01 | 0.20 | 0.10 |
| | | Allyl methacrylate [part(s)] | 0.20 | 0 | 0 | 0 |
| Dipotassium alkenyl succinate [part(s)] | | | 0.33 | 0.33 | 0.33 | 0.33 |
| Volume-average particle size [nm] | | | 300 | 300 | 300 | 300 |
| Degree of swelling [times] | | | 5.1 | 13.8 | 5.2 | 7.3 |
| Graft polymer (C) | | | C37 | C38 | C39 | C40 |
| Composition | Polymer (A) [part(s)] | | 60 | 60 | 60 | 60 |
| | Monomer (B) | Acrylonitrile [part(s)] | 13.6 | 13.6 | 13.6 | 13.6 |
| | | Styrene [part(s)] | 26.4 | 26.4 | 26.4 | 26.4 |
| Graft ratio [%] | | | 54 | 65 | 75 | 83 |
| Grafting density [mol/nm$^2$] | | | 0.069 | 0.073 | 0.071 | 0.073 |

[Table 8]

| | | | Example | | | |
|---|---|---|---|---|---|---|
| | | | 14-5 | 14-6 | 14-7 | 14-8 |
| Polymer (A) | | | A41 | A42 | A43 | A44 |
| Composition | (Aa) component | Butyl acrylate [part(s)] | 98.8 | 98.8 | 98.8 | 98.8 |
| | (Ab) component | pentaerythritol triallyl ether [part(s)] | 1.2 | 1.2 | 1.2 | 1.2 |
| | Another monomer | 1,3-butylene glycol dimethacrylate [part(s)] | 0.05 | 0.10 | 0.10 | 0.10 |
| | | Allyl methacrylate [part(s)] | 0 | 0 | 0 | 0 |
| Dipotassium alkenyl succinate [part(s)] | | | 0.33 | 0.45 | 0.25 | 0.33 |
| Volume-average particle size [nm] | | | 300 | 260 | 440 | 300 |
| Degree of swelling [times] | | | 7.1 | 7.3 | 7.3 | 7.3 |
| Graft polymer (C) | | | C41 | C42 | C43 | C44 |
| Composition | Polymer (A) [part(s)] | | 60 | 60 | 60 | 60 |
| | Monomer (B) | Acrylonitrile [part(s)] | 13.6 | 13.6 | 13.6 | 13.6 |
| | | Styrene [part(s)] | 26.4 | 26.4 | 26.4 | 26.4 |
| Graft ratio [%] | | | 51 | 62 | 74 | 48 |
| Grafting density [mol/nm$^2$] | | | 0.120 | 0.070 | 0.076 | 0.073 |

As is clear from Tables 7 and 8, the polymer (A) of each of Examples 14-1 to 14-7 subjected to mini-emulsion polymerization had a low degree of swelling and tended to have a degree of crosslinking slightly higher than that in the case of Example 1-1 and the like, but the graft ratio of the graft polymer (C) could be increased. In addition, the polymer (A) of each of Examples 14-1 to 14-7 was able to control the grafting density of the graft polymer (C).

Example 14-8 is a case where the volume-average particle size of the polymer (A) was increased without using the mini-emulsion polymerization, but results of the degree of swelling, the graft ratio of the graft polymer (C), and the grafting density equivalent to those in Examples 14-1 to 14-7 were obtained.

"Examples 15 to 22"

Using kinds of the polymer (A) shown in Table 9, kinds of the graft polymers (C) as shown in Table 9 were obtained in the same manner as in Example 14-1.

28 parts of the obtained graft polymer (C), 72 parts of acrylonitrile-styrene copolymer ("AXS Resin 202N" manufactured by UMG ABS Co., Ltd.) as the other thermoplastic resin (D), and 0.8 parts of carbon black were mixed together and melt kneaded at 220°C using a twin screw extruder ("Tex-28V" manufactured by Nippon Steel Works, Ltd.) to obtain a pellet-like thermoplastic resin composition.

For the obtained thermoplastic resin composition, fluidity was evaluated. Results are shown in Table 9.

In addition, for the molded article obtained by injection molding the obtained thermoplastic resin composition, appearance evaluations (1) to (3) for the molded article were evaluated in addition to the impact resistance, the surface appearance, and the thermal stability. Results are shown in Table 9.

[Table 9]

| | | | Example | | | | | | | |
|---|---|---|---|---|---|---|---|---|---|---|
| | | | 15 | 16 | 17 | 18 | 19 | 20 | 21 | 22 |
| Polymer (A) | | | A37 | A38 | A39 | A40 | A41 | A42 | A43 | A44 |
| Graft polymer (C) | | | C37 | C38 | C39 | C40 | C41 | C42 | C43 | C44 |
| Fluidity | MVR [cm$^3$/10min] | | 20 | 21 | 20 | 20 | 19 | 19 | 21 | 16 |
| Impact resistance | Charpy impact strength [kJ/m$^2$] | | 8 | 8 | 8 | 9 | 8 | 8 | 8 | 7 |
| Surface appearance | Reflectance (%) | | 93 | 93 | 93 | 92 | 93 | 92 | 93 | 92 |
| Thermal stability | Gloss retention (%) | | 96 | 91 | 95 | 90 | 92 | 91 | 91 | 90 |
| Appearance evaluation of molded article | Evaluation (1) | L* (iv) | 7.0 | 7.8 | 7.2 | 7.1 | 7.8 | 7.0 | 7.8 | 7.1 |
| | Evaluation (2) | L* (v) | 9.2 | 10.6 | 10.7 | 9.6 | 9.8 | 9.5 | 10.3 | 9.6 |
| | Evaluation (3) | ΔL* | 2.2 | 2.8 | 3.5 | 2.5 | 2.0 | 2.5 | 2.5 | 2.5 |

As is clear from Table 9, the thermoplastic resin composition obtained in each of Examples 15 to 22 was excellent in fluidity. In addition, the molded article obtained by using these thermoplastic resin compositions was excellent in impact resistance, surface appearance, and thermal stability. Moreover, the appearance evaluation (1) of the molded article with a low injection speed was excellent in a black appearance of the molded article. Conversely, also in the appearance evaluation (2) of the molded article with a high injection speed, the molded article tended to be less likely to have defects in appearance such as whitening and bronzing. Furthermore, also in the appearance evaluation (3) of the molded article, the appearance was good, and it was shown that appearance defects such as color unevenness due to the injection speed, which is a molding condition, were less likely to occur.

As described above, when using the graft polymer of the present invention, a molded article excellent in impact resistance, surface appearance, and thermal stability can be obtained. Also, the thermoplastic resin composition of the present invention is excellent in fluidity and moreover is an excellent molding material having small dependence on a molding condition.

Industrial Applicability

According to the polymer of the present invention, it is possible to obtain a graft polymer having a high graft ratio while having a low degree of crosslinking. Accordingly, the graft polymer obtained from the polymer of the present invention has a high graft ratio and is suitable as a material of a thermoplastic resin composition capable of obtaining a molded article excellent in impact resistance, surface appearance, and thermal stability.

According to the thermoplastic resin composition of the present invention, it is possible to obtain a molded article excellent in impact resistance, surface appearance, and thermal stability.

**Claims**

1. A polymer obtained by polymerizing a mixture containing an (Aa) component and an (Ab) component, wherein the (Aa) component is an acrylic acid ester, and
   the (Ab) component is a branched polyfunctional compound having two or more allyl groups, and all carbon-carbon double bonds contained in the polyfunctional compound are derived from the allyl groups.

2. The polymer according to Claim 1,
   wherein the (Ab) component is at least one selected from the group consisting of pentaerythritol tetraallyl ether, pentaerythritol triallyl ether, pentaerythritol diallyl ether, trimethylolpropane triallyl ether, and trimethylolpropane diallyl ether.

3. The polymer according to Claim 1 or 2,
   wherein a degree of swelling is 4 to 20 times.

4. A graft polymer obtained by graft polymerization of one or more monomers selected from the group consisting of aromatic vinyl, vinyl cyanide, (meth)acrylic acid ester, N-substituted maleimide, and maleic acid to the polymer according to any one of Claims 1 to 3.

5. The graft polymer according to Claim 4,
   wherein a grafting density is 0.065 mol/nm$^2$ or higher.

6. A thermoplastic resin composition, comprising:

   the graft polymer according to Claim 4 or 5; and
   a thermoplastic resin other than the graft polymer.

## INTERNATIONAL SEARCH REPORT

| International application No. |
| --- |
| PCT/JP2018/024831 |

**A. CLASSIFICATION OF SUBJECT MATTER**
Int.Cl.  C08F220/18(2006.01)i, C08F265/06(2006.01)i, C08L51/06(2006.01)i,
C08L101/00(2006.01)i

According to International Patent Classification (IPC) or to both national classification and IPC

**B. FIELDS SEARCHED**

Minimum documentation searched (classification system followed by classification symbols)
Int.Cl.  C08F220/18, C08F265/06, C08L51/06, C08L101/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | CN 101921362 A (HUNAN UNIVERSITY) 22 December 2010, claims, paragraphs [0001], [0018]-[0020] (Family: none) | 1, 2, 4-6<br>3 |
| X<br>A | JP 2017-503031 A (UNION CARBIDE CHEMICALS & PLASTICS TECHNOLOGY LLC) 26 January 2017, claims, paragraphs [0055]-[0060] & US 2016/0272748 A1, claims, paragraphs [0055]-[0060] & CN 105682749 A | 1-3<br>4-6 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 August 2018 (06.08.2018) | 14 August 2018 (14.08.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/024831

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2016-525583 A (ROHM AND HAAS COMPANY) 25 August 2016, claims, paragraph [0027], table 1 & US 2016/0053103 A1, claims, paragraphs [0029]-[0041], table 1 & CN 105143290 A | 1-3<br>4-6 |
| A | JP 6-184235 A (GENERAL ELECTRIC CO.) 05 July 1994, entire text & US 5274044 A, whole document & US 5512631 A & US 5274044 A & EP 581521 A2 | 1-6 |
| A | JP 10-298376 A (BAYER CORPORATION) 10 November 1998, entire text & US 5990239 A, whole document | 1-6 |

Form PCT/ISA/210 (continuation of second sheet) (January 2015)

## REFERENCES CITED IN THE DESCRIPTION

**Patent documents cited in the description**

- JP 2017132989 A
- JP 2018060726 A
- JP 2012224670 A
- JP 2002284823 A
- JP 2012214734 A